Europäisches Patentamt

European Patent Office

Office européen des brevets

(11) Veröffentlichungsnummer: **0 380 779**

**A2**

(12) **EUROPÄISCHE PATENTANMELDUNG**

(21) Anmeldenummer: **89122238.2**

(22) Anmeldetag: **01.12.89**

(51) Int. Cl.5: **H04B 10/08, G01M 11/00**

(30) Priorität: **01.02.89 SU 4688091**
**01.02.89 SU 4688093**

(43) Veröffentlichungstag der Anmeldung:
**08.08.90 Patentblatt 90/32**

(84) Benannte Vertragsstaaten:
**AT BE CH DE FR GB LI NL SE**

(71) Anmelder: **LENINGRADSKOE OTDELENIE
TSENTRALNOGO
NAUCHNO-ISSLEDO-VATELSKOGO
INSTITUTA SVYAZI (LONIIS)**
ulitsa Varshavskaya, 11
Leningrad(SU)

(72) Erfinder: **Bukhshtab, Mikhail Alexandrovich**
ulitsa Novoselov, 41, kv.21
Leningrad(SU)
Erfinder: **Koromyslichenko, Vladislav
Nikolaevich**
ulitsa Dekabristov, 58, kv.23
Leningrad(SU)

(74) Vertreter: **Patentanwälte Beetz sen. - Beetz
jun. Timpe - Siegfried - Schmitt-Fumian-
Mayr**
Steinsdorfstrasse 10
D-8000 München 22(DE)

(54) Verfahren zur Ermittlung von optischen Verlusten in Lichtleiterfasern im reflektierten Licht.

(57) Das Ziel besteht in der Erhöhung der Universalität durch Sicherung der Möglichkeit, die Verluste im beliebigen i-Lichtleiter aus einer frei gewählten Zahl von mit einem minimalen Luftspalt verbundenen Lichtleitern und an der Verbindungsstelle der i-l und i-Lichtleiter (i-Verbindung) ohne Luftspalt zu messen; wird gewährleistet durch eine nacheinanderfolgende Messung durch die Energie der Reflexionsimpulse nach der Energie und der Gesamtleistung der Komponenten des Strahlungsimpulse von den Stirnseiten des letzten und des Zwischenlicht-leiter und deren angekoppelten Stirnseiten und durch die Ermittlung von optischen Verlusten nach mathematischen Ausdrücken.

FIG.1

EP 0 380 779 A2

## Verfahren zur Ermittlung von optischen Verlusten in Lichtleiterfasern im reflektierten Licht

Die vorliegende Erfindung bezieht sich auf das Gebiet der Faseroptik und kann zur Ermittlung von Strahlungsschwächungskoeffizienten in Verbindungsnetzen, die auf der Grundlage von Lichtleitern aufgebaut sind, angewendet werden.

Es ist ein Verfahren zur Messung von optischen Verlusten in Lichtleiterfasern im reflektierten Licht bekannt, welches die Einführung eines Strahlungssendeimpulses in den zu messenden Lichtleiter, dessen Länge die Hälfte der Länge der eingestellten Modeverteilung für diesen Typ des Lichtleiters, die Messung der Energie des Impulses, der von der Ausgangsstirnseite des Leerlauflichtleiters $N_1$ reflektiert ist, die Messung der Energie des Impulses, der von der in einem minimalen Abstand voneinander angeordneten Ausgangsstirnseite des Leerlauflichtleiters und der Eingangsstirnseite des zu messenden Lichtleiters $N_2$ reflektiert ist, die Messung der Energie des Impulses, der von der Ausgangsstirnseite des zu messenden Lichtleiters $N_3$ reflektiert ist, sowie die Ermittlung von optischen Verlusten $\mu$ pro Längeneinheit des zu messenden Lichtleiters einschließt (s. die UdSSR-Anmeldung Nr. 4204727, für welche ein Erteilungsbescheid vom 30.05.88 erlassen worden ist.) Dieses bekannte Verfahren ist als Prototyp gewählt worden, weges dem technischen Wesen nach der anmeldungsgemässen technischen Lösung am nächsten steht.

Der Nachteil des bekannten Verfahrens zur Messung von Verlusten besteht darin, dass es unmöglich ist, an Verbindungsstellen sowohl von zwei miteinander ohne Luftspalt verbundenen Lichtleitern als auch bei einer frei gewählten Menge von miteinander mit einem minimalen Luftspalt angekoppelten Lichtleitern sowie an deren Verbindungsstellen ohne Luftspalt zu messen.

Das erste Ziel der vorliegenden Erfindung ist die Erhöhung der Universalität durch Sicherung einer Möglichkeit, die Verluste im beliebigen i-Lichtleiter, der aus einer frei gewählten Zahl n von mit einem minimalen Luftspalt verbundenen Lichtleitern gewählt wird, zu ermitteln.

Das zweite Ziel der vorliegenden Erfindung besteht ebenfalls in der Erhöhung der Universalität durch Ermittlung optischer Verluste an der Verbindungsstelle des Leerlauf- und des zu messenden Lichtleiters, d.h. jedes i-l- und i-Lichtleiters ohne Luftspalt.

### Darlegung des Wesens der Erfindung

Das erste Ziel wird dadurch erreicht, dass im bekannten Verfahren zur Messung von optischen Verlusten in Lichtleiterfasern im reflektierten Licht, welches die Zugabe eines Sende-Lichtimpulses dem ersten Lichtleiter, die Messung der Energie des Impulses, der von der Ausgangsstirnseite des ersten Licht leiters reflektiert ist, die Ankoppelung des ersten und des zweiten Lichtleiters mit einem minimalen Luftspalt, die Messung der Energie des Impulses, der vom Luftspalt, welcher zwischen der Ausgangsstirnseite des ersten Lichtleiters und der Eingangsstirnseite des zweiten Lichtleiters $N_2$ angeordnet ist, reflektiert ist, die Messung der Energie des Impulses, der von der Ausgangsstirn des zweiten Lichtleiters $N_3$ und die Ermittlung von optischen Verlusten im zweiten Lichtleiter gemäss der Beziehung

$$2 \mu l = 2 \ln (N_2 - N_1) - \ln N_1 - \ln N_3 \qquad (1),$$

worin $l_2$ die Länge des zweiten Lichtleiters ist, einschließt, vorgeschlagen wird,

- das Signal $N_1$ nach der Energie und der Gesamtleistung der Komponenten des Strahlungsimpulses, der von der Ausgangsstirnsei te des i-l-Lichtleiters reflektiert ist, zu messen;
- das Signal $N_2$ nach der Energie bzw. der Gesamtleistung der Komponenten des Impulses, der von den mit einem minimalen Luftspalt angekoppelten Stirnseiten der i-l- und i-Lichtleiter reflektiert ist, zu messen;
- das Signal $N_3$ nach der Energie und der Gesamtleistung der Komponenten des Impulses, der von der Ausgangsstirnseite des i-Lichtleiters reflektiert ist, zu messen; nach der Ermittlung von optischen Verlusten $\mu$ nach der Formel (I) im ganzen Lichtleiter l mit einer Länge li die i-l- und i-Lichtleiter ohne Luftspalt zu verbinden, die Energie oder die Gesamtleistung $N_4$ der Komponenten des Impulses, der von der Ausgangsstirnseite des sich gebildeten einheitlichen Lichtleiters reflektiert ist, zu messen und optische Verluste $K_i$ in der i-Verbindung gemäss der Beziehung

$$K_i = 10 \lg \frac{1}{\tau_i} = (-4,34\, \mu_i l_i)(5 \lg N_1 - 5 \lg N_4) = 10 \lg N_1 - 10 \lg (N_2 - N_1) + 5 \lg N_3 - 5 \lg N_4 \qquad (2),$$

worin $\tau_i$ Durchlassgrad der i-Verbindung ist, zu ermitteln.

Um das zweite Ziel der Erfindung zu realisieren, wird vorgeschlagen, nach der Ermittlung der optischen Verluste $\mu$ in dem zu messenden Lichtleiter mit einer Länge l den Leerlauf- und den zu messenden Lichtleiter ohne Luftspalt zu verbinden, die Energie oder die Gesamtleistung des Impulses $N_4$ der von der Ausgangsstirnseite des sich gebildeten einheitlichen Lichtleiters reflektiert ist, zu messen und die Ermittlung der optischen Verluste K an der Verbindungsstelle gemäss der Beziehung:

$$K = 10 \lg\frac{1}{j} = -4{,}343\,\mu l\,(5\,\lg N_1 - 5\lg N_4) = \; = 10\,\lg N_1 - 10\lg(N_2 - N_1) + 5\lg N_3 - 5\lg N_4 \qquad (3)$$

durchzuführen.

Die genannten Merkmale der Erfindung wurden in dieser Gesamtheit nirgends angewendet und waren nicht bekannt, was es gestattet, die vorliegende Erfindung als eine Erfindung anzusehen, die dem Kriterium der Weltneuheit entspricht.

Das Verfahren zur Messung von Verlusten im beliebigen i-Lichtleiter aus einer frei gewählten Zahl von mit einem minimalen Luftspalt verbundenen Lichtleitern sowie an den Verbindungsstellen der i-I- und i-Lichtleiter (i-Verbindung) ohne Luftspalt enthält folgende Reihenfolge von zusammenhängenden Verfahrensschritten, und zwar:

1. Man mißt die Energie bzw. die Gesamtleistung $N_1$ der Komponenten des Impulses, der in direkter oder der Rückrichtung der i-I angekoppelten Lichtleiter durchgegangen ist und von der Ausgangsstirnseite des i-I-Lichtleiters reflektiert ist;

2. Man verbindet die i-I- und i-Lichtleiter mit einem minimalen Luftspalt und mißt die Gesamtenergie bzw. die Gesamtleistung $N_2$ der Komponenten des Impulses, der vom Luftspalt zwischen diesen Lichtleitern reflektiert ist;

3. Man misst die Energie bzw. die Gesamtleistung des Impulses $N_3$, der von der Ausgangsstirnseite des i-Lichtleiters reflektiert ist;

4. Man ermittelt die gesamten optischen Verluste im Lichtleiter gemäss der Beziehung

$$2\mu_i l_i = 2\,l\,\eta\,(N_2 - N_1) - l\,\eta\,N_1 - l\,\eta\,N_3 \qquad (4)$$

5. Man verbindet die Lichtleiter i-I und i ohne Luftspalt

6. Man mißt die Energie bzw. die Gesamtleistung $N_4$ der Komponenten des Impulses, der von der Ausgangsstirnseite des sich gebildeten einheitlichen Lichtleiters reflektiert ist;

7. Man ermittelt die Verluste in der i-Verbindung gemäss der Beziehung (2).

Der Vorteil des erfindungsgemässen Messverfahrens besteht darin, dass damit die Möglichkeit geschaffen wird, optische Verluste im beliebigen i-Lichtleiter aus einer frei gewählten Zahl von miteinander verbundenen Lichtleiter und an den Verbindungsstellen der i-I- und i-Lichtleiter ohne Luftspalt zu messen. Da sich das Licht von der Stirnseite eines hochwertigen Lichtleiters mit geringen Lichtverlusten um einige Ordnungen mehr reflektiert, erhöht sich wesentlich der dynamische Messbereich zur Seite grosser Verluste, folglich auch für optisch Faserverbindungslinien mit langgezogenen Abschnitten. Dabei werden die Verluste in der Verbindung der Lichtleiter ohne Luftspalt in demselben Betrieb der stabilen Modeverteilung, in welchem auch die ganze Linie der Lichtleiter untersucht wird gemessen.

Das Verfahren zur Ermittlung von optischen Verlusten an der Verbindungsstelle der Lichtleiter ohne Luftspalt enthält folgende Reihenfolge von zusammenhängenden Verfahrensschritten:

1. Nach der Ermittlung der Verluste $\mu$ in dem zu messenden Lichtleiter mit einer Länge l werden die angekoppelten Leerlauf- und zu messende Lichtleiter ohne Luftspalt verbunden;

2. Man mißt die Energie bzw. die Gesamtleistung $N_4$ des Impulses, der von der Ausgangsstirnseite des sich gebildeten einheitlichen Lichtleiters reflektiert ist;

3. Man ermittelt optische Verluste K in der Verbindung gemäß der Beziehung (3).

In diesem Verfahren besteht der Vorteil darin, dass gleichzeitig mit der Messung von optischen Verlusten in dem zu untersuchenden Lichtleiter es gelingt, unter denselben Bedingungen der Lichtverteilung, die dem Betrieb einer stabilen Modeverteilung, die vom Leerlauflichtleiter geschaffen wird, entspricht, Verluste an der Verbindungsstelle ohne Luftspalt des Leerlauflichtleiters, folglich jedes beliebigen frei gewählten und zu messenden Lichtleiters quantitativ zu ermitteln.

Eine gemeinsame Eigenschaft besteht darin, daß durch die Durchführung der Messungen im reflektierten Licht bei einem doppelten Sondieren im Verbindungsbereich die Empfindlichkeit zu den optischen Verlusten in der Verbindung im Vergleich mit den Messungen im Durchgangslicht um das Zweifache steigert.

Kurzbeschreibung der Zeichnungen

Die Erfindung wird anhand der Zeichnung näher erläutert.

Es zeigen:

Fig. 1 eine Vorrichtung zur Durchführung des erfindungsgemäßen Verfahrens bei zwei verbundenen Lichtleitern;

Fig. 2 eine Vorrichtung zur Durchführung des erfindungsgemäß en Verfahrens bei n verbundenen Lichtleitern;.

Die Vorrichtung enthält eine Strahlungsquelle 1, einen Teiler (Verzweiger) der einfallenden und reflektierten Strahlung 2, einen Empfänger von reflektierten Signalen 3, in eine optische Linie angekoppelte Lichtleiter 4, einen i-I-Lichtleiter 5, einen i-Lichtleiter 6, einen Verbindungsabschnitt der i-I- und i-Lichtleiter 7.

Die vorliegende Erfindung wird folgenderweise realisiert

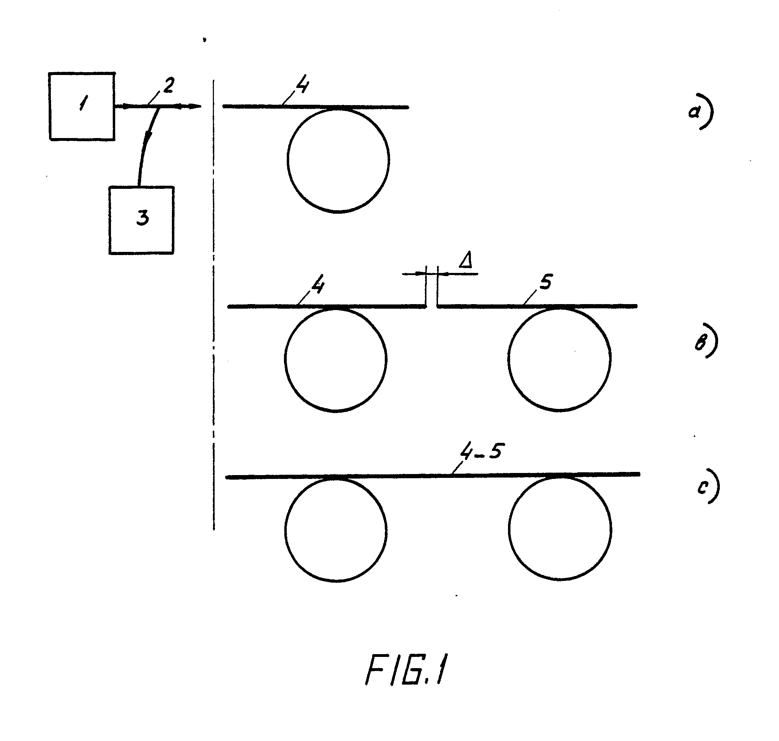

Um das technische Wesen des vorliegenden Vorschlages besser zu verstehen, wollen wir die Ermittlung der optischen Verluste zuerst bei zwei verbundenen Lichtleitern (Fig. 1) näher betrachten.

Nachdem man die Energie bzw. die Gesamtleistung $N_1$ des Impulses, der von der Ausgangsstirnseite des Leerlauflichtleiters 4 reflektiert ist, jeweils die Energie und die Gesamtleistung $N_2$ des Impulses, der vom Luftspalt zwischen den angekoppelten Stirnseiten des Leerlauflichtleiters 4 und des zu messenden Lichtleiters 5 reflektiert ist, und die Energie bzw. die Gesamtleistung $N_3$ des Impulses, der von der Ausgangsstirnseite des zu messenden Lichtleiters 5 reflektiert ist, gemessen hat, ermittelt man die gesamten optischen Verluste $\mu l$ im Lichtleiter 5 gemäss der Beziehung

$$2 \mu l = 2 \ln(N_2 - N_1) - \ln N_1 - \ln N_3 \qquad (5),$$

worin I die Länge des zu messenden Lichtleiters ist.

Danach mißt man die Lichtleiter 4, 5 ohne Luftspalt. Man mißt die Energie bzw. die Gesamtleistung $N_4$ des Impulses, der von der Ausgangsstirnseite des sich gebildeten einheitlichen Lichtleiters 4-5 reflektiert ist, die

$$N_4 = \text{const}\phi \exp( - 2 \mu_x l_x) \, \tau^2 \exp (-2 \mu l)\rho \qquad (6)$$

gleich ist,

worin

der Koeffizient "const" die Empfindlichkeit des Empfängers und die Durchlaßgrade des Verzweigers 2 der direkten und der Rückstrahlung charakterisiert;

$\phi$ Strom, Energie bzw. die Gesamtleistung des Strahlungsimpulses der Quelle 1 bedeutet;

$\mu_x l_x$ die gesamte Strahlungsdämpfung im Leerlauflichtleiter 4 bedeutet;

$\mu l$ die gesamte Strahlungsdämpfung in dem zu messenden Lichtleiter 5 bedeutet.

Da die Signale $N_1$, $N_2$, $N_3$ jeweils

$$N_1 = \text{const}\phi \exp (-2 \mu_x l_x)\rho \qquad (7)$$

$$N_2 = \text{const}\phi \exp (-2 \mu_x l_x)\rho \left[1 + \frac{1-\rho}{1+\rho} \right] \qquad (8)$$

$$N_3 = \text{const}\phi \exp (-2 \mu_x l_x)\left( \frac{1-\rho}{1+\rho} \right)^2 \exp(-2 \mu l)\rho \qquad (9)$$

gleich sind, während die optischen Verluste in dem zu messende Lichtleiter durch die Beziehung

$$\exp(-2\mu l) = \frac{N_3 N_1}{(N_2 \cdot N_1)^2} \qquad (10)$$

ermittelt werden, folgt aus den Beziehungen (6), (7) die Gleichung, die es ermöglicht, die Verluste an der Verbindungsstelle auszuscheiden, die wie folgt aussieht:

$$\tau^2 \exp(-2 \mu l) = \frac{N_4}{N_1} \qquad (11)†$$

Aus den Gleichungen (10), (11) werden die optischen Verluste K an der Verbindungsstelle entweder aus den Beziehungen (6) bis (11)

$$K = I - \tau = I - \frac{N_2 - N_1}{N_1} \sqrt{\frac{N_4}{N_2}} \qquad (12)$$

oder in dB

$$K = 10 \lg \frac{1}{\tau} = 10 \lg N_1 + 5 \lg N_3 - 10 \lg (N_2 - N_1) - 5 \lg N_4 \qquad (13)$$

oder bei gleich nach der Messung des Signals $N_3$ ermittelten Verlusten $\mu l$ nach der Gleichung

$$K = I - \tau = 1 - \exp (- \mu l) \sqrt{\frac{N_4}{N_1}} \qquad (14)$$

oder in dB

$$K = 10 \lg \frac{1}{7} [ \exp (\mu l) \; \frac{N_1}{N_4} \; ] = = [-4{,}34 \; \mu l] (5 \lg N_1 - 5 \lg N_4) \quad (15)$$

ermittelt.

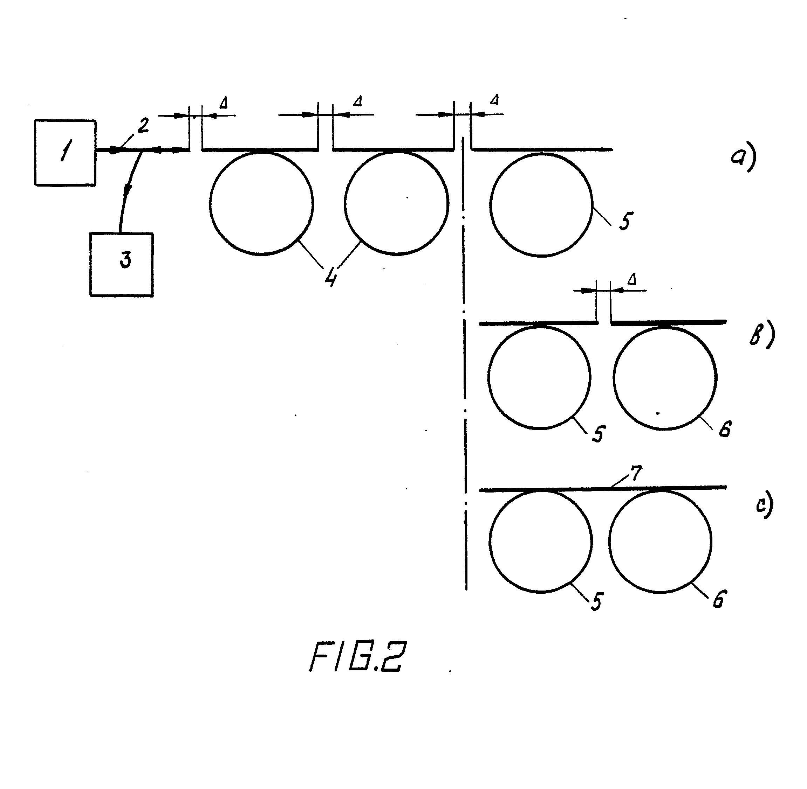

Wenn mehrere (n) Lichtleiter (Fig.2) verbunden werden, wird das Verfahren folgenderweise realisiert.

Man gibt einen Lichtimpuls von der Strahlungsquelle 1 durch die Energie oder die Gesamtleistung über den Verzweiger 2 der Linie der Lichtleiter 4 zu und misst mit dem Empfänger 3 das Signal $N_1$, welches durch den Impuls, der von der Ausgangsstirnseite des i-I-Lichtleiters 5 (s. Ansicht a der Fig 2) reflektiert ist,

$$N_1 = const \; \phi \tau_{1,2} \cdot \tau_4 \cdot \tau_5 \cdot \rho \cdot \tau_5 \; \tau_4 \cdot \tau_{2,3} = const \; \tau_{1,2} \cdot \tau_{2,3} \cdot \tau_4^2 \cdot \tau_5^2 \cdot \rho \quad (16)$$

worin $\tau_{1,2}$; $\tau_{2,3}$ Durchlassgrad durch den Verzweiger der direkten und Rückstrahlung;

$\tau_4$ Durchlaßgrad der optischen Linie;

$\tau_5$ Durchlaßgrad des i-I-Lichtleiters 5;

$\rho$ Stirnreflexionsgrad bedeuten,

bedingt ist.

Nachher koppelt man die i-I- und i-Lichtleiter (Ansicht b, Fig. 2) mit einem minimalen Luftspalt an. Man misst dann nacheinander die Signale, die durch einen vom Luftspalt zwischen den Lichtleitern 5, 6 reflektierten Gesamtimpuls

$$N_2 = const \, \phi \tau_{1,2} \cdot \tau_{2,3} \cdot \tau_4^2 \cdot \tau_5^2 \; \rho \; (1 - \frac{1-\rho}{1+\rho} \; ) \quad (17)$$

und den von der Ausgangsstirnseite des i-I-Lichtleiters 6 reflektierten Impuls

$$N_3 = const \, \phi \tau_{1,2} \cdot \tau_{2,3} \cdot \tau_4^2 \cdot \tau_5^2 \quad (18)$$

bedingt sind.

Aus den Beziehungen (16) bis (18) werden die optischen Verluste $\mu_i l_i$ in dem zu untersuchenden Lichtleiter i ermittelt:

$$\exp \; (-2 \mu_i l_i) \; = \; \frac{N_1 N_3}{(N_2 - N_1)^2} 2 \qquad (19)$$

Der nächste Verfahrensschritt ist die Verbindung der Lichtleiter 5, 6 ohne Luftspalt (Ansicht "c", Fig. 2). Man mißt das Signal $N_4$, welches durch den Impuls, der von der Ausgangsstirnseite des sich gebildeten einheitlichen Lichtleiters 5, 6 reflektiert ist, bedingt ist.

$$N_4 = const \, \phi \tau_{1,2} \cdot \tau_{2,3} \cdot \tau_4^2 \cdot \tau_5^2 \cdot \tau_i^2 \exp (- 2 \, \mu_i l_i) \rho \quad (20)$$

Aus den Ausdrücken (16) und (20) werden der Durchlassgrad $\tau_i$ der Verbindungsstelle 7 der Lichtleiter 5-6

$$\frac{N_4}{N_1} '' \; \tau_i^2 \exp (- 2 \mu_i l_i) \quad (21)$$

oder optische Verluste $K_i$ an der Verbindungsstelle des i-I-und i-Lichleiters

$$K_1 = 1 - \tau_i = 10 \exp (-\mu_i l_i) \; \sqrt{\frac{N_4}{N_1}} \quad (22)$$

oder in dB

$$K_i = 10 \lg \frac{1}{7} [\exp ( -\mu_i l_i) \frac{N1}{N4} ] '' (. \; ^{4}\rho^{34} \cong \omega ) (^5 \omega \lambda \sim_1 - 5 \lg N_4) \quad (23)$$

ermittelt.

Aus den Ausdrücken (16) bis (18) folgt ebenfalls, daß

$$K_i \; = \; 1 \; - \; \tau_i \; = \; 1 \; - \; \frac{N_2 - N_1}{N_1} \; \sqrt{\frac{N_4}{N_1}} \qquad (24)$$

oder in dB

$$K_i = 10 \lg \frac{1}{\tau_i} = 10 \lg N_1 + 5 \lg N_3 - 10 \lg (N_2 - N_1) - 5 \lg N_4 \quad (25)$$

Da bei der Ermittlung optischer Verluste im Lichtleiter alle vor diesem angeordneten Elemente der optischen Verbindungslinie durch Strahlungsimpulse in einer unveränderlichen stationären Lage sondiert werden, wird die Genauigkeit der Messung von Verlusten $\mu_i$ in Übereinstimmung mit dem Ausdruck (19) durch die Genauigkeit der energetischen Parameter der reflektierten Impulse $\Delta$ M und die Länge des Lichtleiters $l_1$ ermittelt.

Da

$$N \cong \Delta (N_2 - N_1) \cong \Delta N_3 \cong \Delta N_4 = \Delta N \quad (26)$$

ist,

5

werden wir nach der Differentierung der Formel (19)

$\Delta \mu_i = (2\Delta N/N)(1/l_i)$    (27)

bekommen.

Folglich wird die Genauigkeit der Ermittlung der Strahlungsverluste im Lichtleiter durch den verdoppelten relativen Fehler der Messung des Signals $\Delta N/N$ ermittelt.

Bei $\Delta N/N = \mp 0,1\%, \Delta \mu_i l_i = \mp 0,01$ dB und sogar bei $l_i = 0,1$ km $\Delta \mu_i = \mp 0,01$ dB; bei $l = 10$ km $\Delta \mu_i = \pm 0,001$ dB.

Die Messgenauigkeit der Verluste an der Verbindungsstelle der i-l- und i-Lichtleiter wird gemäss dem Ausdruck (21) durch die Messgenauigkeit des Signale $N_1$, $N_4$ und durch die Ermittlungsgenauigkeit der Gesamtverluste $\mu_i$, $l_i$ ermittelt, wie aus dem Ausdruck (24)

$$\Delta K/K = \pm \left( \frac{2\Delta N}{N} + \frac{1}{2} \frac{2\Delta N}{N} \right) = \pm \frac{3\Delta N}{N} \qquad (28)$$

oder

$$\Delta K/K \simeq \pm \left( \frac{\Delta N}{N} + \Delta \mu_i l_i \right)$$

folgt.

Bei einem gewöhnlichen Fehler $\Delta N/N = 0,1\%$ beträgt der Feh ler $\Delta K/K = \pm 0,013$ dB $< \pm 0,15$ dB.

Praktisch ist es unmöglich, solch eine Genauigkeit bei den Messungen in einem gestreuten Licht zu erreichen, weil nur die Reproduzierbarkeit der Streuungscharakteristiken auf einen Niveau $\mp 0,1$ bis $0,2$ dB liegt.

Das anmeldungsgemässe Verfahren gewährleistet gegenüber dem Messverfahren im Streuungslicht wegen eines zweifachen Durchgangs mit dem Luftstrom durch die Verbindungsstelle der Lichtleiter eine Erhöhung der Messgenauigkeit mindestens um das 2-fache.


Industrielle Anwendbarkeit


Die vorliegende Erfindung kann im Bau, bei der Renovierung und der vorbeugenden Wartung von Lichtfaserverbindungslinien angewendet werden.


**Ansprüche**

1. Verfahren zur Messung von optischen Verlusten in Lichtleiterfasern im reflektierten Licht, welches die Zugabe eines Sende-Lichtimpulses dem ersten Lichtleiter, die Messung der Energie des Impulses $N_1$, der von der Ausgangsstirnseite des ersten Lichtleiters reflektiert ist, die Ankoppelung des ersten und des zweiten Lichtleiters mit einem minimalen Luftspalt, die Messung der Energie $N_2$ des Impulses, der vom Luftspalt, welcher zwischen den Ausgangs- und Eingangsstirnseiten jeweils des ersten und des zweiten Lichtleiters angeordnet ist, reflektiert ist, die Messung der Energie $N_3$ des Impulses, der von der Ausgangsstirnseite des zweiten Lichtleiters reflektiert ist, und die Ermittlung von optischen Verlusten im zweiten Lichtleiter gemä ß der Beziehung

$2\mu l_2 = 2 \ln (N_2 - N_1) - \ln N_1 - \ln N_3$    (1)

einschlie ßt, dadurch gekennzeichnet, daß man zwecks Erhöhung der Universalität durch Sicherung einer Möglichkeit, die Verluste im beliebigen i-Lichtleiter aus einer frei gewählten Zahl von mit einem minimalen Luftspalt verbundenen Lichtleitern und an der Verbindungsstelle der i-l und i-Lichtleiter (i-Verbindung) ohne Luftspalt zu messen, das Signal $N_1$ nach der Energie bzw. der Gessamtleistung der Komponenten des Strahlungsimpulses, der von der Ausgangsstirnseite des i-l-Lichtleiters reflektiert ist, mi ß t, das Signal $N_2$ nach der Energie bzw. der Gesamtleistung der Komponenten des Impulses, der von den mit einem minimaler Luftspalt angekoppelten Stirnseiten des i-l- und i-Lichtleitern reflektiert ist, mißt, das Signal $N_3$ nach der Energie oder der Gesamtleistung der Komponenten des Impulses, der von der Ausgangsstirnseite des i-Lichtleiters reflektiert ist, mißt, nach der Ermittlung von optischen Verlusten $\mu$ nach der Formel (1) im ganzen Lichtleiter I mit einer Länge I die i-I- und i-Lichtleiter ohne Luftspalt verbindet, die Energie oder die Gesamtleistung $N_4$ der Komponenten des Impulses, der von der Ausgangsstirnseite des sich gebildeten einheitlichen Lichtleiterreflektiert ist, mißt und optische Verluste $K_i$ in der i-Verbindung gemäß der Beziehung

$$K_i = 10 \lg\frac{1}{\tau_i} = (-4{,}34\mu_i l_i)\,(5\lg N_1 - 5\lg N_4) = 10\lg N_1 - 10\lg(N_2 - N_1) + 5\lg N_3 - 5\lg N_4 \qquad (2),$$

worin $\tau_i$ Durchlaßgrad der i-Verbindung ist,
$l_2$ die Länge des zweiten Lichtleiters bedeutet, ermittelt.

2. Verfahren zur Ermittlung von optischen Verlusten in Lichtleiterfasern im reflektierten Licht nach Anspruch 1, dadurch gekennzeichnet, daß man zwecks Erhöhung der Universalität durch Sicherung einer Möglichkeit, optische Verluste an der Verbindungsstelle der Lichtleiter ohne Luftspalt zu messen, nach der Ermittlung der optischen Verluste $\mu$ in dem zu messenden Lichtleiter mit einer Länge I den Leerlauf- und den zu messenden Lichtleiter ohne Luftspalt verbindet, die Energie oder die Gesamtleistung des Impulses $N_4$, der von der Ausgangsstirnseite des sich gebildeten einheitlichen Lichtleiters reflektiert ist, mißt und die optischen Verluste K an der Verbindungsstelle gemäß der Beziehung

$$K = 10\lg\frac{1}{\tau} = (-4{,}343\mu l)(5\lg N_1 - 5\lg N_4) = \;= 10\lg N_1 - 10\lg(N_2 - N_1) + 5\lg N_3 - 5\lg N_4$$

ermittelt.

FIG.1

EP 0 380 779 A2

a)

Δ    Δ    Δ

1    2

3

4

5

Δ

B)

5    6

7

c)

5    6

FIG.2